# EUROPEAN PATENT APPLICATION

(11) **EP 1 688 473 A2**
(43) Date of publication of application: **09.08.2006**
(21) Application number: 05013374.3
(22) Date of filing: 21.06.2005
(51) Int. Cl.: C09K 11/06

(54) **Fluorescent colourant compositions, colouring process and coloured articles**

(30) Priority: 04.02.2005 JP 2005029567
(71) Applicant: Dainichiseika Color & Chemicals Mfg. Co., Ltd., Chuo-ku Tokyo 103-8383 (JP)
(72) Inventor: Yamamiya, Shiro, Dainichiseika Color & Chemicals, Chuo-ku Tokyo 103-8383 (JP); Koiso, Hideyuki, Dainichiseika Color & Chemicals, Chuo-ku Tokyo 103-8383 (JP); Shimanaka, Hiroyuki, Dainichiseika Color & Chemi., Chuo-ku Tokyo 103-8383 (JP); Kono, Hisao, Dainichiseika Color & Chemicals Mfg., Chuo-ku Tokyo 103-8383 (JP); Okamoto, Hisao, Dainichiseika Color & Chemicals, Chuo-ku Tokyo 103-8383 (JP); Nogami, Atsushi, Dainichiseika Color & Chemicals, Chuo-ku Tokyo 103-8383 (JP); Komiyama, Nakaji, Dainichiseika Color & Chemicals, Chuo-ku Tokyo 103-8383 (JP); Minami, Satoshi, Dainichiseika Color & Chemicals, Chuo-ku Tokyo 103-8383 (JP); Sakai, Naoyuki, Dainichiseika Color & Chemicals, Chuo-ku Tokyo 103-8383 (JP)
(74) Representative: Hartz, Nikolai

(57) **Abstract**

Fluorescent colorant compositions contain a pigment and a resin. The pigment is a crystalline, azo-based, fluorescent pigment obtained from a coupling reaction of a specific diazo compound, which was obtained from a particular aromatic amine, with a particular acetoacetylamino-containing aromatic coupler. As crystalline characteristics of the crystalline, azo-based, fluorescent pigment, the ratio (h/w) of a height (h) of a maximum peak to its half-value width (w) in a diffraction angle (2θ) range of from 5 to 35° in an x-ray diffraction spectrum of the pigment may preferably be 20 or greater. Also disclosed are coloring processes and colored articles, which make use of the fluorescent colorant compositions.

## Description

### FIELD OF THE INVENTION

This invention relates to image/information-recording, fluorescent colorant compositions, each of which contains a crystalline, azo-based fluorescent pigment and owing to its hiding property, is not affected by fluorescence from a fluorescent brightener or the like contained in a material colored with the fluorescent colorant composition.

### DESCRIPTION OF THE BACKGROUND

In processes for recording, printing or coating a fluorescent record/information on advertisements, decorations, merchandise labels, bills, securities, certificates, cards and the like, water- or solvent-soluble fluorescent dyes or fluorescent pigments formed of fine particulate resins colored with such fluorescent dyes (see JP-A-10-007956) have been used conventionally.

The fluorescent colorants which are used in these conventional processes are accompanied by a drawback that they are inferior in light fastness. Moreover, limitations are imposed on the application field of these fluorescent colorants, because due to their high transparency, they are affected by blue fluorescence from fluorescent dyes (fluorescent brighteners) employed to make colored materials look whiter, they undergo bleeding under the influence of water or a solvent, or they are deprived of their fluorescent property by chlorinated oxidizing agents.

### SUMMARY OF THE INVENTION

An object of the present invention is, therefore, to provide a fluorescent colorant composition, which is not substantially affected by a fluorescent brightener contained in a material colored with the fluorescent colorant composition, is excellent in waterproofness, solvent resistance and chlorine resistance, and can afford a colored article excellent in various properties including fastness.

With a view to resolving the drawbacks of the conventional chromatic fluorescent dye systems as colorants and developing fluorescent colorants which are excellent in color-developing property and are capable of satisfying various fastness and economy, the present inventors have proceeded with an extensive investigation. As a result, the present inventors have found crystalline, azo-based, fluorescent pigments, which are fine pigment particles of high crystallinity but give off strong fluorescence and are excellent in waterproofness, solvent resistance, chlorine resistance and the like, leading to the present invention.

In one aspect of the present invention, there is thus provided a fluorescent colorant composition comprising a pigment and a resin, wherein the pigment is a crystalline, azo-based, fluorescent pigment obtained from a coupling reaction of a diazo compound, which was obtained from an amine represented by the following formula (1) or (2), with a coupler represented by the following formula (3) or (4): 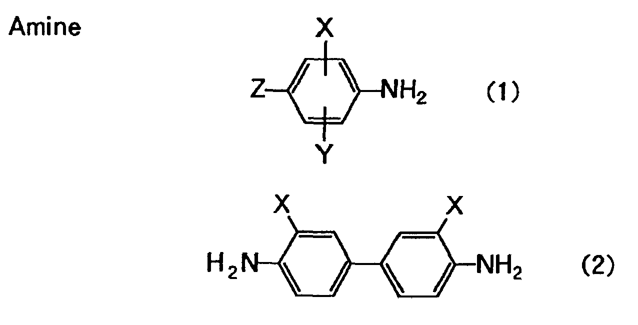 wherein X and Y may be the same or different and each independently represents a methyl, methoxy or ethoxy group, and Z represents an -NHCO-A or -NH-A group in which A represents a substituted or unsubstituted aromatic ring, 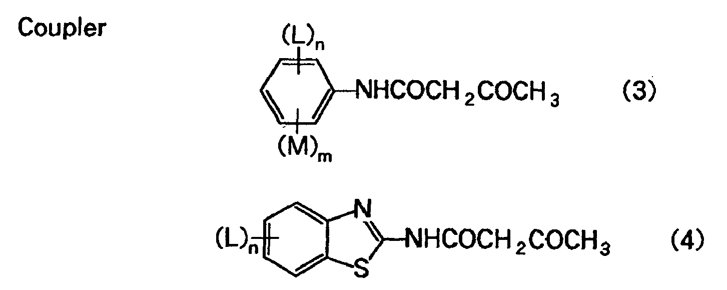 wherein L represents a halogen atom or an RCOO- or -COOR group in which R represents a hydrogen atom or a C₁-C₁₀ alkyl group, n stands for an integer of from 0 to 4, M represents a -CONH₂ group, -CONH-A group in which A represents a substituted or unsubstituted aromatic ring, or -CO-NH-CO group which is an imido group forming an imide ring, and m stands for 0 or 1.

As crystalline characteristics of the crystalline, azo-based, fluorescent pigment, a ratio (h/w) of a height (h) ofamaximumpeaktoahalf-valuewidth (w) thereofinadiffraction angle (2θ) range of from 5 to 35° in an x-ray diffraction spectrum of the pigment can preferably be at least 20.

The resin can preferably be at least one resin selected from the group consisting of poly (meth) acrylic resins, polyvinyl resins, polymaleic acid resins, polyester resins, polyether resins, polyurethane resins, polyamide resins, polyepoxy resins, polycarbonate resins, polysiloxane resins, polyolefin resins, and polyfunctional unsaturated-bond-containing oligomers (ultraviolet-ray or electron-radiation curing monomers).

The fluorescent colorant composition is useful preferably as a water-based, oil-based or solventless colorant for stationery, a colorant for printing inks, a colorant for dry or wet electrophotography, a colorant for inkjet inks, a colorant for thermal transfer printing or setting, a colorant for paints, a colorant for textile printing agents, or a coating material.

In another aspect of the present invention, there is also provided a coloring process for a material, which comprises coloring the material with the above-described fluorescent colorant composition by writing, recording, printing, electrophotography, inkjet recording, thermal transfer recording, painting, textile printing, or coating. The material may contain a fluorescent brightener. In a further aspect of the present invention, there is also provided a colored article obtained by the above-described coloring process.

The fluorescent colorant composition according to the present invention contains the crystalline, azo-based, fluorescent pigment as a component, and different from the use of the conventional dye-based fluorescent colorants, is equipped with high color strength and sufficiently high hiding property. The colored article making use of the fluorescent colorant composition, therefore, has a more vivid hue because the fluorescent colorant composition is not affected by florescence from a fluorescent brightener or the like contained in the material colored with the fluorescent colorant composition.

In addition, the fluorescent colorant composition according to the present invention is excellent in waterproofness and solvent resistance and is also very strong in light fastness, and therefore, can sufficiently withstand its use even outdoors. It also features high resistance to damages of information owing to its chlorine resistance. Depending on the resin, it is also possible to provide fabric or the like with washing resistance. It is also possible not only to print paper and the like but also to color fibers and the like.

The fluorescent colorant composition according to the present invention are also excellent in light fastness, heat resistance, chemical resistance, especially chlorine resistance, and waterproofness, so that colored articles can also be produced stably throughout their production process. When the fluorescent colorant composition according to the present invention is used as an image/information-recording colorant composition, the thus-recorded image or information stably remains clear over a long period of time.

### BRIEF DESCRIPTION OF THE DRAWINGS

FIG. 1 shows an x-ray diffraction spectrum of Pigment 1 in Table 1. A maximum peak appeared at a diffraction angle (2θ) of 11°. The ratio (h/w) of the height (h) of the maximum peak to its half-value width (w) = 75.

FIG. 2 shows an x-ray diffraction spectrum of Pigment 9 in Table 1. A maximum peak appeared at a diffraction angle (2θ) of 9°. The ratio (h/w) of the height (h) of the maximum peak to its half-value width (w) = 60.

FIG. 3 shows an x-ray diffraction spectrumof Pigment 12 in Table 1. A maximum peak appeared at a diffraction angle (2θ) of 26°. The ratio (h/w) of the height (h) of the maximum peak to its half-value width (w) = 60.

FIG. 4 shows an x-ray diffraction spectrum of a pigment crude of Pigment 12 in Table 1. A maximum peak appeared at a diffraction angle (2θ) of 26°. The ratio (h/w) of the height (h) of the maximum peak to its half-value width (w) = 15.

### DETAILED DESCRIPTION OF THE PREFERRED EMBODIMENTS

Based on preferred embodiments, the present invention will next be described in further detail. The crystalline, azo-based, fluorescent pigment for use in the present invention is obtained by a coupling reaction of a diazo compound, which has been obtained from an amine represented by the formula (1) or (2), with a coupler represented by the formula (3) or (4). Depending on the combination of the amine and coupler, the crystalline, azo-based, fluorescent pigment exhibits a yellow-orange-yellowish red hue.

The diazotization reaction for obtaining the diazo compound from the amine and the coupling reaction can be conducted by methods known per se in the art. For example, the amine represented by the formula (1) or (2) is diazotized in water or an organic solvent. The resulting diazo compound is subj ected to the coupling reaction with the coupler represented by the formula (3) or (4) to obtain a pigment. The pigment is then stirred under heat in a solvent to control its crystalline form such that the crystalline, azo-based, fluorescent pigment for use in the present invention is obtained. The thus-obtained, crystalline, azo-based, fluorescent pigment may be heated in a solvent to form it into particles of a relative large crystalline form, followed by the grinding into a target particle size in a mill.

As the amine which is a raw material for the diazo component useful in the production of the crystalline, azo-based, fluorescent pigment, the compound represented by the formula (1) or (2) is used. In these formulas, the substituents X and Y may be the same or different and each independently represents a methyl, methoxy or ethoxy group. The substituent Z represents an -NHCO-A or -NH-A group, and A represents an aromatic ring, such as a benzene ring, naphthalene ring or biphenyl ring, which may contain one or more substituents such as halogen atoms, alkoxy groups, lower alkyl groups and/or the like.

Examples of the amine represented by the formula (1) include 4-benzoylamino-2-methyl-5-methoxyaniline, 4-benzoylamino-2,5-dimethoxyaniline, 4-benzoylamino-2,5-diethoxyaniline, 4'-phenylbenzoylamino-2,5-dimethoxyaniline, 4-(3',4'-isoindolinonecarbamoyl)-2,5-dimethoxyaniline, 4'-chlorobenzoyl-2,5-dimethoxyaniline, 3',5'-dichlorobenzoyl-2,5-dimethoxyaniline, 4'-chlorobenzoyl-2,5-diethoxyaniline, 4-aminodiphenylamine, and 4'-methoxyaminodiphenylamine.

Examples of the amine represented by the formula (2) include 3,3'-dimethyl-4,4'-diaminobiphenyl and 3,3'-dimethoxy-4,4'-diaminobiphenyl.

As the coupler for use in the production of the crystalline, azo-based fluorescent pigment, the compound represented by the formula (3) or (4) is used. In the formula (3), 0 to 4 substituents L are contained, and each substituent L represents a halogen atom which can be selected from a fluorine, chlorine or bromine atom, or an RCOO- or -COOR group in which R represents a hydrogen atom or a C₁-C₁₀ alkyl group. M represents a -CONH₂ group, -CONH-A group in which A has the same meaning as described above, or -CO-NH-CO group which is an imido group forming an imide ring, and m stands for 0 or 1. Further, the substituents L in the formula (4) have the same meaning as in the formula (3).

Examples of the coupler represented by the formula (3) include halogen derivatives such as acetoaceto-4-chloranilide, acetoaceto-2-chloranilide, acetoaceto-2,4-dichloranilide and acetoaceto-2,4,6-trichloranilide; carboxylate ester derivatives such as acetoaceto-4-butoxycarbonylanilide, acetoaceto-2-butoxycarbonylanilide and acetoaceto-4-ethoxycarbonylanilide; and 5-aminoisoindolinon-acetoacetanilide, 2-chloro-5-phenylcarbamoyl-acetoacetanilide, 2-chloro-5-(2'-chloro-4'-methylphenyl)carbamoyl-acetoacetan ilide, acetoaceto(2-carbamoyl)anilide, 4-acetoacetoaminophthalimide, and 4-acetoacetoaminobenzimidazolone.

Examples of the coupler represented by the formula (4) include 2-acetoacetamidobenzothiazole.

The diazo compound, which has been obtained from the amine, and the coupler are coupled by a method known per se in the art to obtain a pigment crude for use in the present invention. Depending on the combinations of amines and couplers, pigment crudes of yellow-orange-yellowish red hues are available. These pigment crudes are crystallized as will be described subsequently herein, and are then used in the present invention. Fluorescent colorant compositions comprising these crystalline, azo-based, fluorescent pigments are all strongly fluorescent and exhibit excellent properties in various fastness such as light fastness, heat resistance, chemical resistance and waterproofness, although they are slightly different from one another depending on the combinations of the amines and couplers and the kinds of the resins and additives used in combination.

As synthesis examples, Table 1 presents crystalline, azo-based, fluorescent pigments, each of which was obtained by synthesizing a pigment crude from a combination of its corresponding amine and coupler and then crystallizing the pigment crude, together with their hues and fluorescence intensities.

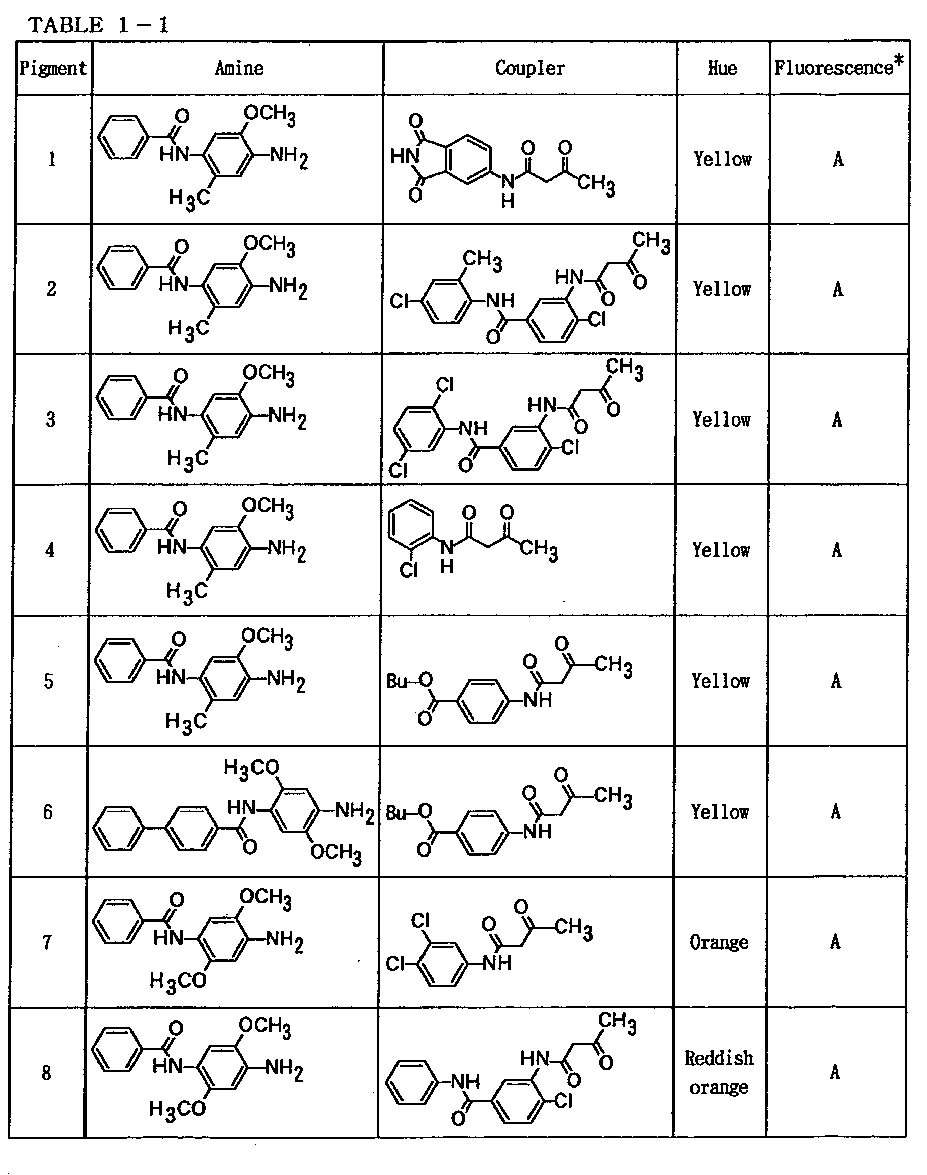

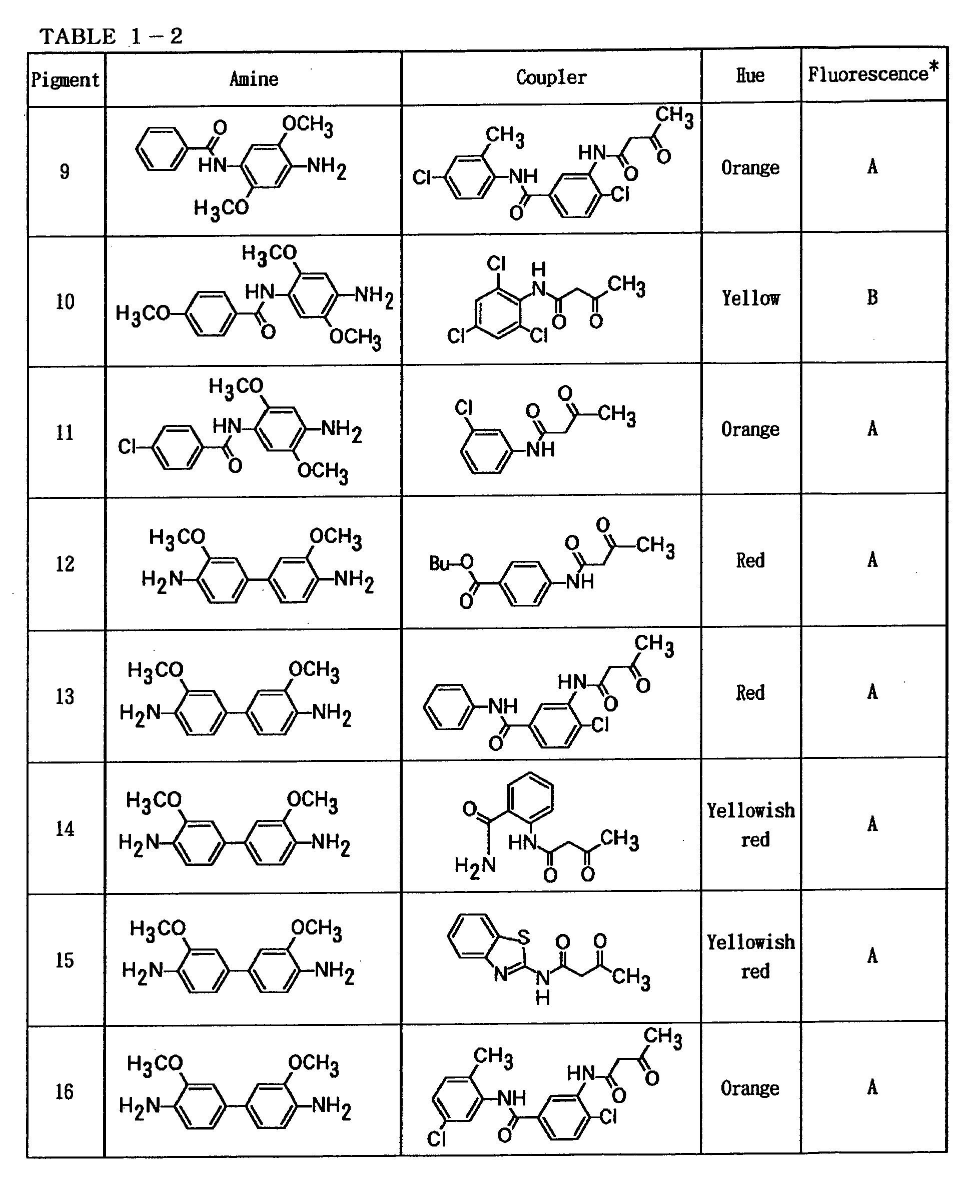

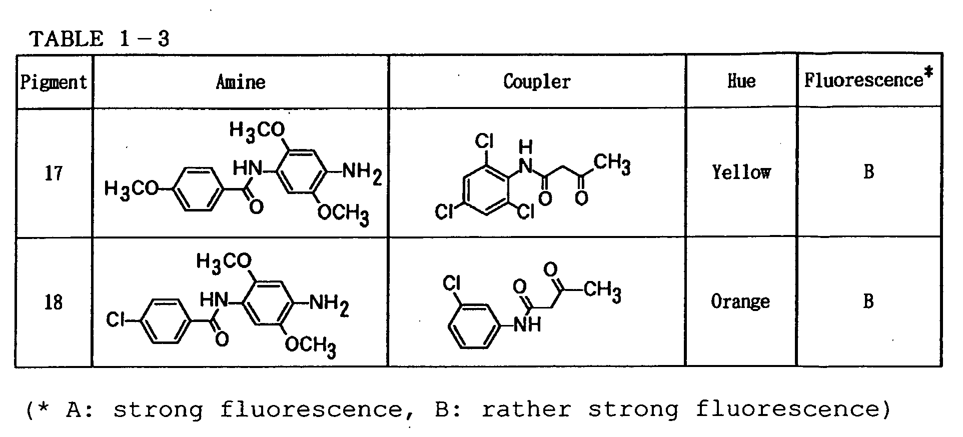

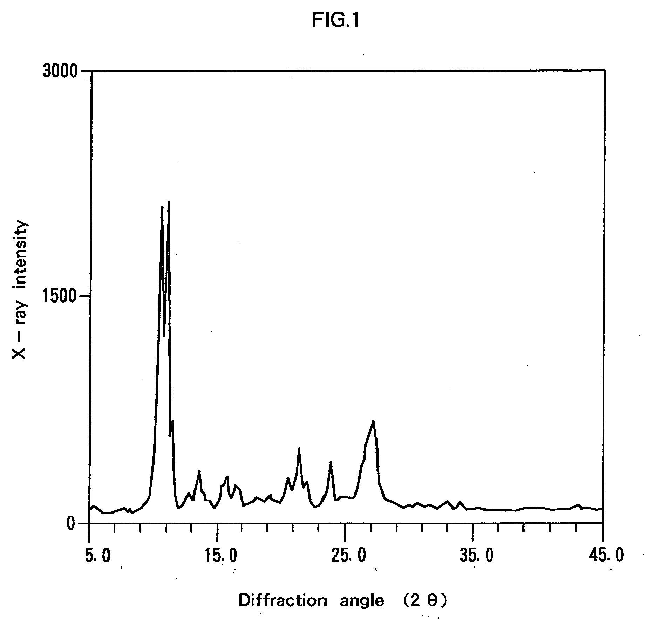

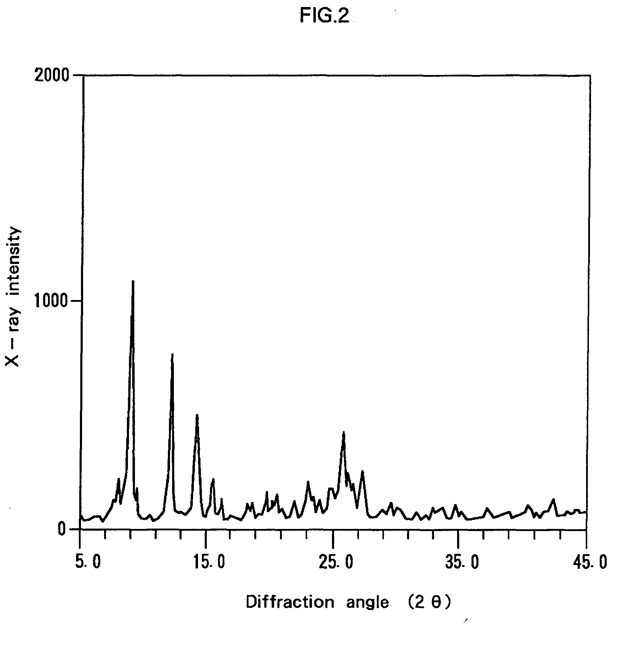

X-ray diffraction spectra of Pigments 1 and 9 in Table 1 are shown in FIGS. 1 and 2, respectively.

Particles of each crystalline, azo-based, fluorescent pigment can be controlled in various ways.

The pigment crude the coupling reaction of which has been completed can be controlled to a target degree of crystallization by heating and stirring it under adequate conditions in a suitable solvent. No particular limitations can be imposed on the kind of the solvent to be used and the conditions such as stirring, temperature and time, because they are determined depending on the kind of the pigment crude to be obtained from the combination of the amine and coupler. Owing to the kind of the chosen solvent and the selected adequate conditions, the crystalline, azo-based, fluorescent pigment can be obtained with a vivid hue and strong fluorescence intensity. As an alternative, the pigment crude can also be used after heating it in a solvent to once form it into crystals greater than a target particle size and then reducing its particle size to the target particle size by wet grinding in a mill such as a ball mill, mortar mill or dynomill or by dry grinding that grinds a mixture of the pigment and powder of an inorganic salt in a ball mill, kneader or the like.

As crystalline characteristics of the crystalline, azo-based, fluorescent pigment, the ratio (h/w) of the height (h) of a maximum peak to a half-value width (w) thereof in a diffraction angle (2θ) range of from 5 to 35° in an x-ray diffraction spectrumof the pigment canbe at least 20, preferably at least 30. An h/w smaller than 20 means that the azo-based fluorescent pigment has low crystallinity. A colored article, which makes use of a colorant composition comprising the pigment, is not preferred, because it is low in fluorescence intensity so that information is hardly obtainable from the fluorescent pigment (in other words, it is low in the characteristic of fluorescence).

The resin for use in the fluorescent colorant composition according to the present invention functions as a dispersant or dispersing aid for the pigment as long as it remains as a colorant composition. When actually used, for example, as a recording agent, the resin functions as a binder for the pigment after the fluorescent colorant composition is printed and fixed.

Resins usable for such purposes can be those employed in dry developers or wet developers for electrophotography, electrostatic printing or electrostatic recording or in thermal transfer ink ribbons or films, in addition to those commonly employed in various paints, printing inks, stationery, inkjet inks and/or textile printing agents. As resins for use in the present invention, however, those having no color are desired to avoid a reduction in the fluorescence strength of the fluorescent colorant composition, with those also showing as low light absorption as possible in the ultraviolet range being more desired.

The preferred resin for use in the fluorescent colorant composition according to the present invention under such conditions can be at least one resin selected from the group consisting of poly(meth)acrylic resins, polyvinyl resins, polymaleic acid resins, polyester resins, polyether resins, polyurethane resins, polyamide resins, polyepoxy resins, polycarbonate resins, polysiloxane resins, polyolefin resins, and polyfunctional unsaturated-bond-containing oligomers (ultraviolet-ray or electron-radiation curing monomers).

As resins usable as described above, conventionally-known resins can be used, and no particular limitation is imposed thereon. Examples include (meth) acrylate ester polymers, (meth)acrylate ester copolymers, (meth)acrylate ester-styrene copolymers and (meth)acrylate ester-ethylene copolymers, each of which can be obtained by homopolymerizing a (meth)acrylate ester or copolymerizing a (meth)acrylate ester with another unsaturated monomer; poly(meth)acrylic resins such as (meth)acrylate ester-(meth)acrylic acid copolymers, styrene-(meth)acrylate ester-(meth)acrylic acid copolymers, styrene-(meth)acrylic acid copolymers, ethylene-vinyl acetate-(meth)acrylic acid copolymers and ethylene-(meth)acrylate ester-(meth)acrylic acid copolymers, and their soluble salts such as their metal salts, ammonium salts and amine salts; polyvinyl resins such as (co) polymers of vinyl monomers such as styrene, vinyl acetate and vinylpyrrolidone, and (co)polymers of polyvinyl alcohols obtained by saponifying (co)polymers of vinyl acetate; copolymers of the above-described (meth)acrylic monomers and vinyl monomers; polyolefin resins such as polyethylene, polypropylene, and ethylene-vinyl acetate copolymer; and maleic acid resins such as styrene-maleic acid copolymer and rosin-modified maleic acid.

Usable examples of the resin also include polyester resins such as polyester resins, which have been obtained by esterification condensation between dibasic acids such as succinic acid and sebacic acid and diols such as ethylene glycol and cyclohexanedimethanol, and alkyd resins containing long-chain fatty acids; polyether resins such as polyethylene glycol, polyethylene glycol monoalkyl ethers, random and block copolymers of ethylene glycol and propylene glycol, and polytetramethylene glycol; polyurethane resins such as polyester polyurethane resins, which are urethane reaction products of the above-described polyesters, diol components such as ethylene glycol and polysiloxane diols, and diisocyanates such as isophorone diisocyanate, and can be reacted with diamines as needed), polyether polyurethane resins, and polysiloxane polyurethane resins; polyamide resins such as ring-opening polymerization products of ε-caprolactam, nylons obtained from condensation of diamines and dibasic acids, and polyamide resins between the dimeric acid of oleic acid and ethylenediamine; polycarbonate resins such as polyhexylcarbonate; polyepoxy resins; polysiloxane resins; and polyfunctional unsaturated-bond-containing oligomers (ultraviolet-ray or electron-radiation curing monomers) such as urethane acrylate and trimethylolpropane triacrylate.

When the fluorescent colorant composition is an aqueous dispersion, the resin may preferably contain one or more types of hydrophilic groups such as carbonyl groups, sulfonic groups, phosphoric groups and/or their alkaline substance neutralization salts, amino groups and/or their acidic substance neutralization salts, and/or polyethylene glycol groups. The resin is used in a form dissolved, dispersed or emulsified in water.

No particular limitation is imposed on the form of the resin upon its use in the present invention. The resin can, therefore, be used in a form conforming with the form of each fluorescent colorant composition. To provide a solid, fluorescent colorant composition, for example, the resin can be used either in a solid form or after causing it to melt. As an alternative, the resin can be dissolved, dispersed or emulsified in an organic solvent or water to obtain a fluorescent colorant composition in a liquid form, and subsequently, the organic solvent or water is caused to evaporate to afford the solid, fluorescent colorant composition. To provide a liquid, fluorescent colorant composition, on the other hand, the resin can be used by dissolving, dispersing or emulsifying it in an organic solvent or an aqueous system.

Depending on the application purpose, the fluorescent colorant composition can contain one or more additives such as nonionic surfactants, anionic surfactants, cationic surfactants, amphoteric surfactants, oil-soluble pigment dispersants, water repellants, leveling agents, and the like.

The above-described surfactants are conventionally-known surfactants. Usable examples of the surfactants include, but are not specifically limited to, anionic surfactants such as alkyl- or arylsulfonate salts, alkyl- or aryl monoalcohol sulfate ester salts, and alkyl ester phosphate salts; cationic surfactants such as tetraalkylammonium salts; nonionic surfactants such as polyethylene glycol monoalkyl ethers or esters thereof, and polyethylene glycol alkyl phenyl ethers; and amphoteric surfactants such as imidazole derivatives and alkylbetaines.

As the oil-soluble pigment dispersants, those known to date can be used, and no particular limitation is imposed thereon. Among the above-described resins, for example, there can be mentioned an amide compound between polycaprolactone or poly-12-hydroxystearic acid and polyethylenimine, a compound with a naphthalene group or nonylphenyl group bonded through an ester linkage to an end of polycaprolactone or poly-12-hydroxystearic acid, and as commercial products, the "SOLSPERSE™" series (products of The Lubrizol Corporation), the "HINOAKUTO™" series (products of Kawaken Fine Chemicals Co., Ltd.) and the "DISPER BIG™ 160" series (products of BYK-Chemie GmbH).

The above-described additives are also desired to have no color so that they do not lower the fluorescence intensity of the fluorescent colorant composition, with additives showing as low light absorption as possible in the ultraviolet range being more desired.

Corresponding to the application purpose of the fluorescent colorant composition, a conventionally-known dispersion medium is used. Examples of the dispersion medium include the above-described resins themselves, water, organic solvents, long-chain aliphatic hydrocarbon solvents, hydrocarbon waxes, and a group of monomers containing an α,β-unsaturated bond therein.

The dispersion medium is used to disperse or dissolve the crystalline, azo-based fluorescent pigment and resin such that the fluorescent colorant composition is obtained. Depending on the dispersion media, various fluorescent colorant compositions can be obtained. For example, the use of water provides a water-based fluorescent colorant composition, the use of an organic solvent or a long-chain aliphatic hydrocarbon solvent provides an oil-based fluorescent colorant composition, the use of a resin itself, such as a polyester resin or polyacrylic resin, or a hydrocarbon wax provides a solid, solventless, fluorescent colorant composition, and the use of an monomer with an α,β-unsaturated bond contained therein provides a solventless, ultraviolet-ray or electron-radiation curing, fluorescent colorant composition.

It is to be noted that as the dispersion medium for use in the fluorescent colorant composition, no particular limitation is imposed on the above-described resin, organic solvent, long-chain aliphatic hydrocarbon solvent, hydrocarbon wax, or monomer with an α,β-unsaturated bond contained therein, and that those known conventionally and used commonly are each usable. Illustrative of the organic solvent are alcoholic solvents such as methanol and isopropanol; aromatic hydrocarbon solvents such as toluene and xylene; long-chain hydrocarbon solvents of the isoparaffin system such as isooctane and isononane, including the "ISOPAR™" series and "EXXSOL™" series (both, products of Exxon Chemical Company) ; ketone solvents such as methyl ethyl ketone and methyl isobutyl ketone; ester solvents such as ethyl acetate and butyl acetate; ether solvents such as tetrahydrofuran and diethylene glycol dimethyl ether; glycol solvents such as triethylene glycol monobutyl ether and propylene glycol monomethyl ether acetate; amide solvents such as dimethyl formamide and dimethyl acetamide; and sulfur-containing solvents such as dimethyl sulfoxide.

Preferably usable as the hydrocarbon wax is a hydrocarbon wax which is solid at room temperature, has a melting point of from 60°C to 130°C, and after molten, has a low viscosity. Examples include olefin waxes such as polyethylene wax, polypropylene wax and paraffin waxes; alcohol waxes such as stearyl alcohol and behenyl alcohol; carboxylic acid waxes such as stearic acid and behenic acid; aliphatic esters such as stearyl stearate, methyl behenate and tristearyl glyceride; and aliphatic amides such as stearamide and bisethylenestearamide.

Further, examples of the monomer with an α,β-unsaturated bond contained therein include vinyl monomers such as styrene and vinyl acetate; and (meth)acrylate esters including monofunctionalacrylate ester monomers,such asmethyl (meth)acrylate, ethyl (meth)acrylate, butyl (meth)acrylate, benzyl (meth)acrylate, 2-methoxyethyl (meth)acrylate, 2-hydroxyethyl (meth)acrylate and dicyclopentanyl (meth)acrylate, and polyfunctional acrylate ester monomers, such as the (meth) acrylates of polyols like 1, 4-butanediol and pentaerythritol.

Concerning these monomers with an α,β-unsaturated bond contained therein, it is also desired from the standpoint of avoiding a reduction in the fluorescence intensity of the fluorescent colorant composition like the used resin that subsequent to the curing of the monomers, the cured products have no color and show as low light absorption as possible in the ultraviolet range.

Corresponding to the application purpose of the fluorescent colorant composition, the fluorescent colorant composition may contain one or more of conventionally-known additives, for example, charge directors, flow additives, preservatives, antioxidants, ultraviolet absorbers, light stabilizers, plasticizers, photopolymerization initiators, radical generators and sensitizers, as needed; and no particular limitation is imposed on such additives.

In the present invention, the fluorescent colorant composition can be used in various processes. These processes include: coating processes each making use of a water-based or oil-based coating material; printing processes each making use of a letterpress ink, lithographic ink, sutaglio (gravure) ink, stencil (screen) ink or flexographic ink; inkjet image-recording processes such as water-based inkjet recording processes, solvent-based inkjet recording processes, thermal-fusion, inkjet recording processes, and inkjet recording processes each making use of an ultraviolet-ray curing ink; thermal transfer processes; and electrophotographic processes.

The fluorescent colorant composition can be used as a water-based, oil-based or solventless colorant for stationery, a colorant for printing inks, a colorant for dry or wet electrophotography, a colorant for inkjet inks, a colorant for thermal transfer printing or setting, a colorant for paints, a colorant for textile printing agents, or a like colorant.

The fluorescent colorant composition can be used by modifying its formula to meet its use, and therefore, no particular limitation is imposed on the formula of the composition. The present invention is characterized by the use of the crystalline, azo-based, fluorescent pigment and resin and optionally, one or more additives.

For example, a water-based, fluorescent colorant composition according to the present invention is useful in stationery, paints, gravure inks, inkjet inks, textile printing agents, and the like. In this case, the fluorescent colorant composition can comprise the above-described crystalline, azo-based, fluorescent pigment, resin and dispersant, water as a dispersion medium, and optionally, an aqueous solvent and one or more additives.

An oil-based, fluorescent colorant composition according to the present invention is useful in stationery, paints, gravure inks, offset inks, inkjet inks, and the like. In this case, the fluorescent colorant composition can comprise the above-described crystalline, azo-based, fluorescent pigment, resin and dispersant, an organic solvent, long-chain aliphatic hydrocarbon solvent, alcohol solvent and/or glycol solvent as a dispersion medium, and optionally, one or more additives.

A solventless, fluorescent colorant composition according to the present invention is useful in electrophotography, specifically dry toners for color copying systems, ribbons or films for solid hot-melt inkjet recording systems or thermal transfer printing or setting systems, or the like. In this case, the fluorescent colorant composition can comprise the above-described crystalline, azo-based, fluorescent pigment, resin and dispersant, a resin or hydrocarbon wax as a dispersion medium, and optionally, one or more additives.

When the fluorescent colorant composition according to the present invention is used in an ultraviolet-ray curing ink, the fluorescent colorant composition can comprise the above-described crystalline, azo-based, fluorescent pigment, resin and dispersant, an α,β-unsaturated-bond-containing monomer as a dispersion medium, and optionally, water or an organic solvent and one or more additives.

The term "fluorescent colorant composition" as used herein encompasses a fluorescent colorant composition with the above-described, crystalline, azo-based, fluorescent pigment contained at a high concentration (hereinafter called "high-concentration, fluorescent colorant composition"). An object of this high-concentration, fluorescent colorant composition is to facilitate the subsequent step of preparing a fluorescent colorant composition, which contains the crystalline, azo-based, fluorescent pigment at a desired concentration, by incorporating the pigment at the high concentration in the high-concentration, fluorescent colorant composition, thoroughly kneading it in advance to disperse the pigment, and then performing a color matching. The high-concentration, fluorescent colorant composition can be used either in a solid form such as coarse particles, coarse powder, fine powder, a sheet or aggregates or in a liquid form.

The contents of the resin, other additive(s), dispersion medium, etc. in the fluorescent colorant composition according to the present invention vary depending on its application purpose. In a high-concentration, fluorescent colorant composition, for example, the content of the crystalline, azo-based, fluorescent pigment can range from 10 wt.% to 60 wt. %, preferably from 15 wt.% to 40 wt.% or so based on the whole composition. The high-concentration, fluorescent colorant composition is used after lowering the content of the crystalline, azo-based, fluorescent pigment to a most preferred level in accordance with the application purpose.

The use of the fluorescent colorant composition according to the present invention makes it possible to color a material by a coloring method or process such as writing, recording, printing, electrophotography, inkjet recording, thermal transfer recording, painting, textile printing, or coating. Especially when coloring such as printing is applied with the fluorescent colorant composition to a fluorescent-brightener-containing material such as paper by any one of the above method or process, the print is provided with a vivid hue without being affected by fluorescence from the material.

### Examples

The present invention will next be described more specifically based on Synthesis Examples, Examples and Comparative Examples, in which each designation of "part" or "parts" or "%" is on a weight basis.

### Synthesis Example 1 (Synthesis of Pigment 12 in Table 1)

### (1) Diazotization reaction

Blue B base hydrochloride (13.4 parts) was added to o-dichlorobenzene (hereinafter abbreviated as "ODB"; 200 parts), followed by cooling. Hydrochloric acid (25 parts) was added to the mixture, and subsequent to vigorous stirring at room temperature for 1 hour, the resultant solution was cooled to 5°C or lower. A solution of sodium nitrite (5.8 parts) in water (20 parts) was added dropwise to the solution over 30 minutes. While the temperature of the liquid mixture was maintained at 5°C or lower, the liquid mixture was stirred further for 1.5 hours to provide it as a diazotization mixture.

### (2) Preparation of a coupler and a coupling reaction

Added to ODB (300 parts) were butyl 4-acetoacetamidobenzoate (24.4 parts), acetic acid (12 parts), and a solution of sodium acetate (11 parts) inmethanol (30 parts), followed by stirring. The solution was provided as a coupler solution. The diazotization mixture was added to the coupler solution. The resulting mixture was stirred at room temperature for 2 hours and then gradually heated to 40°C, at which the mixture was stirred for 4 hours to conduct a coupling reaction.

Subsequent to the completion of the reaction, the reaction mixture was filtered to collect a pigment crude. The pigment crude was washed with methanol. After the pigment crude was thoroughly washed with water, water was fully pressed out. (3) Control of pigment particles

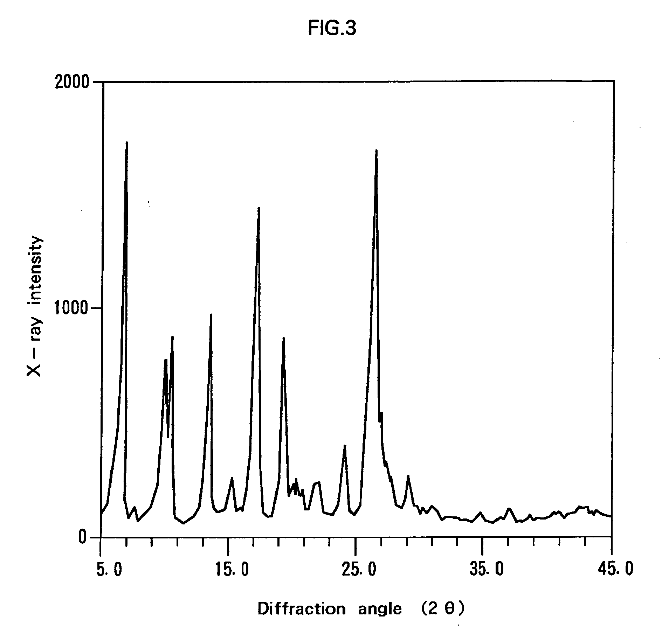

The water paste of the pigment crude, from which water had been fully pressed out as described above, was dispersed in xylene (600 parts), and the resultant dispersion was heated to raise its temperature. The dispersion was heated at from 130 to 140°C for 4 hours while water was distilled off. Subsequent to cooling, the pigment was collected by filtration, washed with xylene (100 parts), and washed further with methanol (200 parts). The pigment was collected by filtration, and then dried at 100°C to afford a pigment (16.7 parts, yield: 83.5%) which was yellow and gave off strong fluorescence. An x-ray diffraction spectrum of the pigment is shown in FIG. 3. A diffraction angle 28 at which a maximum peak appeared was 26°, and the ratio (h/w) of the height (h) of the peak to its half-value width (w) was 60.

The other pigments were each successfully synthesized at a high yield by choosing an adequate solvent. Synthesis examples of the crystalline, azo-based, fluorescent pigments shown in Table 1 are omitted because they can each be synthesized by a similar process as described above.

### Example 1 (Water-based inkjet ink)

Fluorescent Pigment 3 (150 parts) in Table 1, an aqueous solution (solid content: 40%; 187.5 parts) of a styrene-acrylic resin (the potassium salt of a 10/50/20/20 (weight ratio) quadripolymer of styrene/butyl acrylate/methacrylic acid/2-hydroxyethyl methacrylate, polystyrene-converted weight average molecular weight as determined by GPC: 35,000), ethylene glycol (40 parts) and purified water (160 parts) were thoroughly mixed together to prepare a mill base. After the mill base was sufficiently dispersed by using a medium-containing, horizontal disperser, purified water (212.5 parts) was added to the dispersed mill base to obtain a pigment dispersion of 20% pigment content.

To the pigment dispersion (100 parts), ethylene glycol (51.0 parts), glycerin (33.0 parts), polyoxyethylene oleate (1 part), a surfactant (0.8 part), the same styrene-acrylic resin as described above (15 parts) and purified water (197 parts) were added. The resultingmixturewas stirred, and then subjected to centrifugal separation (8,000 rpm, 20 minutes) to remove coarse pigment particles. The mixture was then filtered through a 5-µm membrane filter to obtain a fluorescent pigment ink as a fluorescent colorant composition.

The ink obtained as described above was filled in an ink cartridge, and by an inkjet printer, solid printing was performed on a fluorescent-brightener-containing, glossy inkjet paper, "Photolike™ QP" (product of KONICA CORPORATION). The hue of the print was vivid yellow and, when the print was exposed to ultraviolet rays under a black light, very strong fluorescence was emitted.

### Comparative Example 1

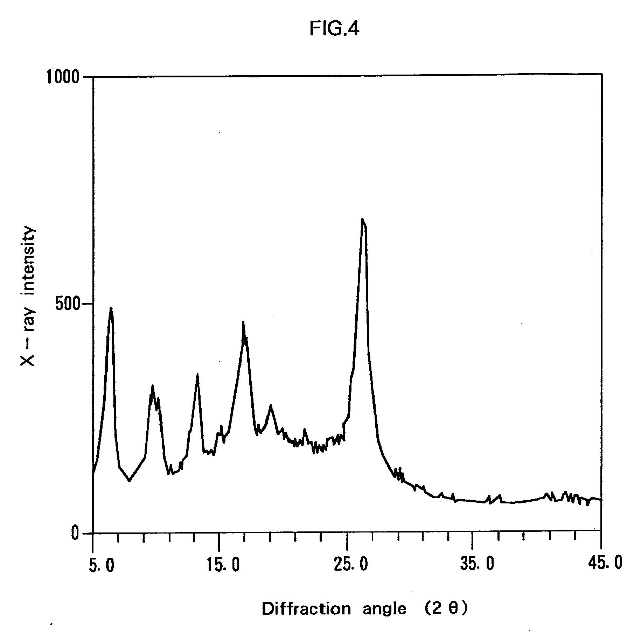

An x-ray diffraction spectrum of the pigment crude obtained above in Synthesis Example 1-(2) is shown in FIG. 4. A diffraction angle 28 at which a maximum peak appeared was 26°, and the ratio (h/w) of the height (h) of the peak to its half-value width (w) was 15.

Using the pigment crude, the procedure of Example 1 was repeated, and then, solid printing was performed on a fluorescent-brightener-containing, glossy inkjet paper, "Photolike™QP" (product of KONICACORPORATION). When the print was exposed to ultraviolet rays under a black light, the emission of fluorescence was weak and moreover, overlapped with fluorescence from the glossy inkjet paper. The hue of the print was hence inferior in vividness.

### Example 2 (Oil-based inkjet ink)

Fluorescent Pigment 8 (2θ: 11°, h/w: 75; 100 parts) in Table 1 obtained in a similar manner as in Synthesis Example 1, an aqueous solution (solid content: 40%, 75parts) of an acrylic resin (a 70/30 (weight ratio) copolymer of 2-ethylhexyl methacrylate/diethylaminoethyl methacrylate, polystyrene-converted weight average molecular weight as determined by GPC: 25,000) in "ISOPAR™ G" (product of Exxon Chemical Company) , and "ISOPAR™ G" (492 parts) were thoroughly stirred and mixed together. The thus-prepared mill base was then sufficiently dispersed by using a medium-containing, horizontal disperser.

To the thus-obtained dispersion (100 parts), polyethylene glycol monolauryl ether (3 parts) and "ISOPAR™ G" (197 parts) were added. The resulting mixture was thoroughly stirred to prepare an ink. The ink was then filtered through a 5-µm membrane filter to obtain a fluorescent pigment ink.

The fluorescent pigment ink obtained as described above was filled in an ink cartridge, and by an inkjet printer, solid printing was performed on a surface-treated, 50-µm PET film. The hue of the print was vivid orange and, when the print was exposed to ultraviolet rays under a black light, very strong fluorescence was emitted.

### Example 3 (Hot-melt solid inkjet ink)

Fluorescent Pigment 13 (2θ: 24°, h/w: 90; 5 parts) in Table 1 obtained in a similar manner as in Synthesis Example 1, poly-12-hydroxystearic acid (polystyrene-converted weight average molecular weight as determined by GPC: 5, 500; 2.5 parts), and paraffin wax (melting point: 65°C, viscosity at 100°C: 5.6 mPa·s; 92.5 parts) were stirred under heat at 120°C. While maintaining that temperature, the resultant mixture was subjected to dispersion in an attritor.

The dispersion was heated, filtered, and then placed in an inkjet printer. Solid printing was performed on a surface-treated, 50-µm PET film. The hue of the print was vivid reddish orange and, when the print was exposed to ultraviolet rays under a black light, very strong fluorescence was emitted.

### Example 4 (Ultraviolet-ray curing inkjet ink)

Fluorescent Pigment 9 (2θ: 9°, h/w: 60; 100 parts) in Table 1 obtained in a similar manner as in Synthesis Example 1, trimethylolpropane triacrylate (130 parts), phenoxyethyl acrylate (150 parts), and an amidation product (20 parts) of polycaprolactone (average polymerization degree: 10) and polyethylenimine (number average molecular weight: 8,000) were thoroughly stirred and mixed together. The thus-prepared mill base was then sufficiently dispersed by using a medium-containing, horizontal disperser.

To the thus-obtained dispersion (40 parts), urethane acrylate ("UA-306H", trade name, product of Kyoeisha Chemical Co., Ltd.; 10 parts), ethylene-oxide-added trimethylolpropane triacrylate (92 parts), dipropylene glycol diacrylate (100 parts) and as a photopolymerization initiator, benzyl dimethyl ketal (8 parts) were added. The resulting mixture was thoroughly stirred to prepare an ink. The ink was then filtered through a 5-µm membrane filter to obtain a fluorescent pigment ink.

The ink obtained as described above was filled in an ink cartridge, and by an inkjet printer, solid printing was performed on a surface-treated, 50-µm PET film. The ink was then cured through a conveyor-type ultraviolet-ray irradiation tunnel to obtain a print. The hue of the print was vivid yellow and, when the print was exposed to ultraviolet rays under a black light, very strong fluorescence was emitted.

### Example 5 (Water-based stationery ink)

Fluorescent Pigment 2 (2θ: 12°, h/w: 55; 320 parts) in Table 1 obtained in a similar manner as in Synthesis Example 1, water (308 parts), ethylene glycol (80 parts), an aqueous ammonium-ion solution (solid content: 35%; 80 parts) of a styrene/maleic acid resin (styrene/maleic acid ratio: 1/1 (weight ratio), acid value: 286), and aqueous ammonia (8 parts) were thoroughly mixed together, and then, dispersed in a horizontal bead mill. Water (2,048 parts), the same resin as described above (160 parts), ethylene glycol (176 parts), and 28% aqueous ammonia (16 parts) were then added. The resulting mixture was stirred to prepare a dispersion, and the dispersion was subjected to centrifugal separation to remove coarse particles. The viscosity and pH of the thus-prepared, water-based ink were 3.6 mPa·s and 9.0, respectively.

The water-based ink was filled in a felt-tip pen, and writing was performed on plain paper. The hue of the writing was vivid yellow and, when the writing was exposed to ultraviolet rays under a black light, very strong fluorescence was emitted. Example 6 (Dry-ground color toner)

After Fluorescent Pigment 11 (2θ: 23°, h/w: 80; 30 parts) in Table 1 obtained in a similar manner as in Synthesis Example 1 and fine powder (70 parts) of a polyester resin (maleic acid/terephthalic acid/2 mole ethylene oxide adduct of bisphenol A=8/9/18 (molar ratio), number average molecular weight: 6, 000, Tg: 60°C) were premixed in a high-speed mixer, the resultant premix was thoroughly kneaded by a heated three-roll mill. The thus-kneaded mixture was cooled and finely ground. The finely-ground mixture was a high-concentration fluorescent colorant composition in the form of fine powder, which contained the crystalline, azo-based, fluorescent pigment as much as 30%.

The high-concentration fluorescent colorant composition (11 parts), an aluminum-complex-based, negative-charging control agent (3 parts) and the same polyester resin as that used in the above (86 parts) were kneaded by a method known per se in the art. The thus-kneaded mixture was cooled, coarsely ground, and then finely ground in a jet mill. The finely-ground mixture was thereafter classified to obtain fine powder of 5 to 10 µm. Colloidal silica was added as a flow additive to the fine powder, followed by the mixing with magnetic iron powder as a carrier to afford a fluorescent-pigment-containing, dry developer for electrophotography. With the developer, copying was performed by an electrophotographic copying machine. The resulting copy showed a vivid orange color and, when the copy was exposed to ultraviolet rays under a black light, very strong fluorescence was emitted.

### Example 7 (Polymerization-dependent, dry color toner)

Fluorescent Pigment 16 (2θ: 12°, h/w: 85; 26. 8 parts) in Table 1 obtained in a similar manner as in Synthesis Example 1, styrene monomer (65 parts), butyl acrylate (35 parts), and as pigment dispersants, an 80/20 (weight ratio) copolymer (4 parts) of styrene and dimethylaminoethyl methacrylate and pentaerythritol tripentastearate (3 parts) were thoroughly mixed. The resultant mixture was then dispersed in an upright bead mill to afford a high-concentration fluorescent colorant composition in a form dispersed in the monomers.

To a liquid mixture consisting of styrene monomer (65 parts), butyl acrylate (35 parts) and azobisisobutyronitrile (1.5 parts), the high-concentration fluorescent colorant composition (19.8 parts) was next added. The resultant mixture was thoroughly stirred to prepare a liquid monomer mixture. After a 10% aqueous solution (71.9 parts) of calcium phosphate and water (726.8 parts) were combined into a mixture in a separate vessel, the liquid monomer mixture was added into the vessel with the mixture contained therein. The thus-obtained mixture was agitated at 10,000 rpm for 5 minutes in a high shear high speed mixer to prepare a suspension consisting of the liquid monomer mixture and the calcium-phosphate-containing mixture.

The suspension was transferred into a polymerizer, and polymerized at 70°C for 5 hours and then, at 85°C for 1 hour. 35% Hydrochloric acid (20 mL) was then added to the polymerization mixture to precipitate the polymerization product. The precipitate was collected by filtration, washed with a 5% aqueous solution of sodium hydroxide, washed further with water, and then dried into a solid. The solid was a fine powder of the crystalline, azo-based, fluorescent pigment, which had an average particle size of 7 µm.

In a similar manner as in the case of the dry-ground color toner in Example 6, colloidal silica was added as a flow additive to the fine powder of the crystalline, azo-based, fluorescent pigment, followed by the mixing with magnetic iron powder as a carrier to afford a fluorescent-pigment-containing, dry developer for electrophotography. With the developer, copying was performed by an electrophotographic copying machine. The resulting copy showed a vivid orange color and, when the copy was exposed to ultraviolet rays under a black light, very strong fluorescence was emitted.

This application claims the priority of Japanese Patent Application 2005-029567 filed February 4, 2005, which is incorporated herein by reference.

## Claims

1. A fluorescent colorant composition comprising a pigment and a resin, wherein said pigment is a crystalline, azo-based, fluorescent pigment obtained from a coupling reaction of a diazo compound, which was obtained from an amine represented by the following formula (1) or (2), with a coupler represented by the following formula (3) or (4): 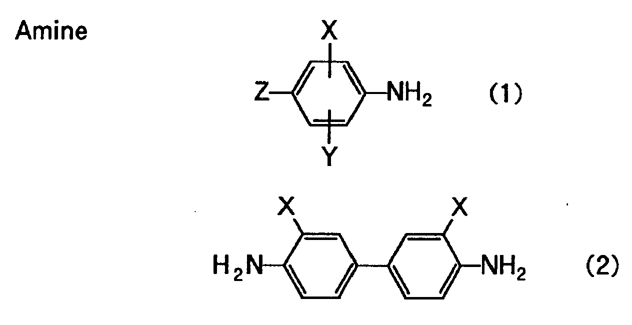 wherein X and Y may be the same or different and each independently represents a methyl, methoxy or ethoxy group, and Z represents an -NHCO-A or -NH-A group in which A represents a substituted or unsubstituted aromatic ring, 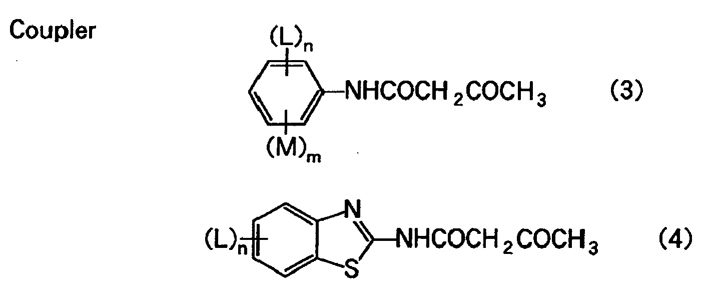 wherein L represents a halogen atom or an RCOO- or -COOR group in which R represents a hydrogen atom or a C₁-C₁₀ alkyl group, n stands for an integer of from 0 to 4, M represents a -CONH₂ group, -CONH-A group in which A represents a substituted or unsubstituted aromatic ring, or -CO-NH-CO group which is an imido group forming an imide ring, and m stands for 0 or 1.

2. A fluorescent colorant composition according to claim 1, wherein as crystalline characteristics of said crystalline, azo-based, fluorescent pigment, a ratio (h/w) of a height (h) ofamaximumpeaktoahalf-valuewidth (w) thereof inadiffraction angle (2θ) range of from 5 to 35° in an x-ray diffraction spectrum of said pigment is at least 20.

3. A fluorescent colorant composition according to claim 1, wherein said resin is at least one resin selected from the group consisting of poly (meth) acrylic resins, polyvinyl resins, polymaleic acid resins, polyester resins, polyether resins, polyurethane resins, polyamide resins, polyepoxy resins, polycarbonate resins, polysiloxane resins, polyolefin resins, and polyfunctional unsaturated-bond-containing oligomers (ultraviolet-ray or electron-radiation curing monomers).

4. A fluorescent colorant composition according to claim 1, which is useful as a water-based, oil-based or solventless colorant for stationery, a colorant for printing inks, a colorant for dry or wet electrophotography, a colorant for inkjet inks, a colorant for thermal transfer printing or setting, a colorant for paints, a colorant for textile printing agents, or a coating material.

5. A coloring process for a material, which comprises coloring said material with a fluorescent colorant composition according to claim 1 by writing, recording, printing, electrophotography, inkjet recording, thermal transfer recording, painting, textile printing, or coating.

6. A colored article obtained by a coloring process according to claim 5.

7. A coloring process according to claim 5, wherein said material contains a fluorescent brightener.

8. A colored article obtained by a coloring process according to claim 7.
